# EUROPEAN PATENT APPLICATION

(11) **EP 1 112 710 A2**
(43) Date of publication of application: **04.07.2001**
(21) Application number: 00311761.1
(22) Date of filing: 29.12.2000
(51) Int. Cl.: A47G 19/22

(54) **Drinking vessel and a flow control valve therefor**

(30) Priority: 30.12.1999 US 475558
(71) Applicant: JOHNSON & JOHNSON CONSUMER COMPANIES, INC., Skillman, NJ 08558 (US)
(72) Inventor: McDonough, Justin E., Kenvil, NJ 07847 (US); Aridgides, Steve, Yardley, PA 19067 (US); Harper, Donald L., Flemington, NJ 08822 (US); Sinisi, John, Chalfont, PA 18914 (US)
(74) Representative: Mercer, Christopher Paul

(57) **Abstract**

A drinking vessel, which is especially adapted for use by infants, toddlers and the like, includes a cup, a lid and a flow control valve. The cup includes a body and an overmolding which partially covers the body to function as a bumper and to provide gripping surfaces for a user. The lid has a spoutless design which allows a user to simulate drinking from a conventional open-mouthed cup and which also maximizes liquid evacuation from the cup. The flow control valve has a polygonally-shaped body with a plurality of corners and a liquid-dispensing nipple which is located in one of the corners so that the flow control valve can be positioned adjacent to a peripheral edge of the lid, thereby promoting the complete evacuation of liquid from the cup. The size, shape and rigidity of the valve body inhibits it from being inserted into the throat of a user or other individual.

## Description

### Field of the Invention

The present invention relates to spill-proof drinking vessels, and, more particularly, to such vessels which are especially adapted for use by infants, toddlers or handicapped individuals.

### Background of the Invention

Drinking vessels, such as training cups, for infants, young children and the like are often provided with a cap or other closure having an apertured spout and an elastomeric valve designed for actuation by a differential pressure or through deformation. Some of these valves include a first valve member to control liquid flow out of the spout and a second valve member to control air flow into the vessel or cup (see, for instance, WIPO Publication No. WO 99/39617). The provision of two valve members is disadvantageous because it doubles the sanitation and misfunction problems and increases manufacturing costs.

In an effort to overcome the foregoing problems, elastomeric valves have been proposed which employ a single valve member. Typically, these valves employ a slitted membrane designed to control the flow of both liquid and air therethrough (see, for instance, U.S. Patent No. 5,890,621). The particular valve disclosed in U.S. Patent No. 5,890,621 is made from multiple parts, thereby complicating manufacture, assembly and cleaning. Because some of the parts are small, there is a safety problem if the valve inadvertently comes apart during use.

All of the valves described above suffer from leakage and/or spillage of liquid when there associated vessels are shaken, dropped or abruptly inverted. Such leakage and/or spillage is created by the sudden impact of liquid against the slitted valve membrane, momentarily opening the membrane to allow the unintentional passage of liquid. In the industry, this phenomenon is commonly referred to as the "trampoline" effect.

One attempt to minimize the aforementioned "trampoline" effect involves increasing the thickness and/or decreasing the area of the active valve membrane. This solution has, however, decreased the flow potential of a valve by increasing the differential pressure or deformation force required to open it, while also restricting the flow rate through the valve, thereby making it harder for a user to drink therefrom.

Another attempted solution to the "trampoline" effect problem involves encapsulating the valve in a cartridge. In the past, this solution has required a cartridge or other housing with multiple parts, resulting in a complex multi-piece assembly which is subject to the same problems as those described above in connection with U.S. Patent No. 5,890,621.

### Summary of the Invention

The present invention relates to a new and improved drinking vessel which includes a novel cup, lid and flow control valve. The drinking vessel, which is especially adapted for use as a trainer cup for infants, toddlers and the like, overcomes many of the problems and disadvantages associated with the prior art devices discussed above.

With respect to the new and improved cup, it includes a body and an overmolding which partially covers the body. The overmolding performs a number of advantageous functions. For instance, in addition to reinforcing the body of the cup, the overmolding can be made from a softer material than the cup body, whereby it functions as a bumper or shock absorber. Even if an impact caused the cup body to crack or fracture, the overmolding would capture the resulting fragments, thereby making for a safer overall product. In one embodiment, the overmolding includes a plurality of horizontal ribs which are spaced apart in a vertical array and which extend circumferentially around the cup body. In this embodiment, the material and design of the overmolding cooperate to improve the grippability of the cup, especially when it is wet. The cup can be rendered skid resistant by applying the overmolding to the bottom surface of the cup. An attractive and unique appearance can be achieved by making the cup body from a translucent material, while making the overmolding from an opaque material. When applied to the cup body in a distinctive pattern or design, the overmolding functions as a permanent decoration.

The new and improved lid of the present invention has a spoutless design which allows a user to simulate drinking from a conventional open-mouthed cup. More particularly, the lid includes a raised, arcuate rim formed from opposed sloping flanks which merge into a tip provided with liquid-dispensing orifices. To allow a user to drink therefrom without neck extension, the flanks cooperate with the tip to form a pocket adapted to receive the user's nose. The lid also has a receptacle for a flow control valve which is positioned in close proximity to a peripheral edge of the lid to thereby maximize liquid evacuation from an associated cup.

Turning now to the new and improved flow control valve, it has a polygonally shaped body with a plurality of corners and a liquid-dispensing nipple positioned in one of the corners. By positioning the nipple in a corner of the valve body, the flow control valve can be positioned adjacent to the peripheral edge of an associated lid, thereby promoting the foregoing objective of maximum liquid evacuation. In a preferred embodiment, the valve body has a generally triangular shape selected so as to deter its entry into the throat of a user or other individual, even upon folding or squeezing of the valve body. This safety feature can be enhanced by molding the flow control valve as a unitary or monolithic component, thereby eliminating small separate parts. Because the flow control valve is typically molded from a relatively soft and flexible material, such as silicone or some other suitable elastomer, reinforcing ribs may be applied to the valve body in order to increase its rigidity. To facilitate assembly and disassembly, the flow control valve may be provided with a handle. It is also possible to provide the flow control valve with a strap and plug combination adapted to regulate the flow of liquid through the nipple in a manner which avoids excessive pressure surges that could cause the undesired "trampoline" effect described hereinabove.

### Brief Description of the Drawings

For a better understanding of the present invention, reference is made to the following detailed description of various exemplary embodiments considered in conjunction with the accompanying drawings, in which:
FIG. 1 is an exploded perspective view of a drinking vessel constructed in accordance with the present invention and comprised of three basic components; namely, a cup, a lid and a flow control valve;
FIG. 2 is a cross-sectional view of the lid and flow control valve of FIG. 1 in an assembled state;
FIG. 3 is a perspective view, looking from below, of the flow control valve illustrated in FIGS. 1 and 2;
FIG. 4 is a front elevational view of the flow control valve illustrated in FIGS. 1 and 2;
FIG. 5 is cross-sectional view, taken along section line V-V of FIG. 4 and looking in the direction of the arrows, of the flow control valve shown in FIG. 4;
FIG. 6 is a rear elevational view of the flow control valve illustrated in FIGS. 1 and 2;
FIG. 7 is a top plan view of the flow control valve shown in FIGS. 1 and 2;
FIG. 8 is a bottom plan view of the flow control valve shown in FIGS. 1 and 2;
FIG. 9 is side elevational view of the flow control valve illustrated in FIGS. 1 and 2;
FIG. 10 is a cross-sectional view, taken along section line X-X of FIG. 9 and looking in the direction of the arrows, with the flow control valve being shown in a normal or relaxed position;
FIG. 11 is a cross-sectional view similar to FIG. 10, except that the flow control valve is shown in a deflected position;
FIG. 12 is a perspective view, looking from below, of an alternate embodiment of the flow control valve shown in FIGS. 1-11;
FIG. 13 is a bottom plan view of the flow control valve shown in FIG. 12;
FIG. 14 is a cross-sectional view, taken along section line XIV-XIV of FIG. 13 and looking in the direction of the arrows, of the flow control valve shown in FIG. 13;
FIG. 15 is a perspective view, looking from below, of another alternate embodiment of the flow control valve shown in FIGS. 1-11;
FIG. 16 is a front elevational view of the flow control valve shown in FIG. 15;
FIG. 17 is a rear elevational view of the flow control valve shown in FIG. 15;
FIG. 18 is a side elevational view of the flow control valve shown in FIG. 15;
FIG. 19 is a bottom plan view of the flow control valve shown in FIG. 15;
FIG. 20 is a top plan view of the flow control valve shown in FIG. 15;
FIG. 21 is a cross-sectional view, taken along section line XXI-XXI of FIG. 20 and looking in the direction of the arrows, with the flow control valve being shown in a non-operating position;
FIG. 22 is cross-sectional view, taken along section line XXII-XXII of FIG. 20 and looking in the direction of the arrows, with the flow control valve in its non-operating position;
FIG. 23 is a cross-sectional view similar to FIG. 21, except that the flow control valve is shown in an operating position;
FIG. 24 is a cross-sectional view similar to FIG. 22, except that the flow control valve is shown in its operating position;
FIG. 25 is a perspective view, looking from above, of yet another alternate embodiment of the flow control valve shown in FIGS. 1-11;
FIG. 26 is a rear elevational view of the flow control valve shown in FIG. 25;
FIG. 27 is a bottom plan view of the flow control valve shown in FIG. 25;
FIG. 28 is a top plan view of the flow control valve shown in FIG. 25;
FIG. 29 is a cross-sectional view, taken along section line XXIX-XXIX of FIG. 28 and looking in the direction of the arrows, of the flow control valve shown in FIG. 28;
FIG. 30 is a perspective view, looking from below, of an alternate embodiment of the lid shown in FIGS. 1 and 2; and
FIG. 31 is a perspective view, similar to FIG. 30, showing the flow control valve of FIGS. 25-29 assembled to the lid of FIG. 30.

### Detailed Description of the Exemplary Embodiments

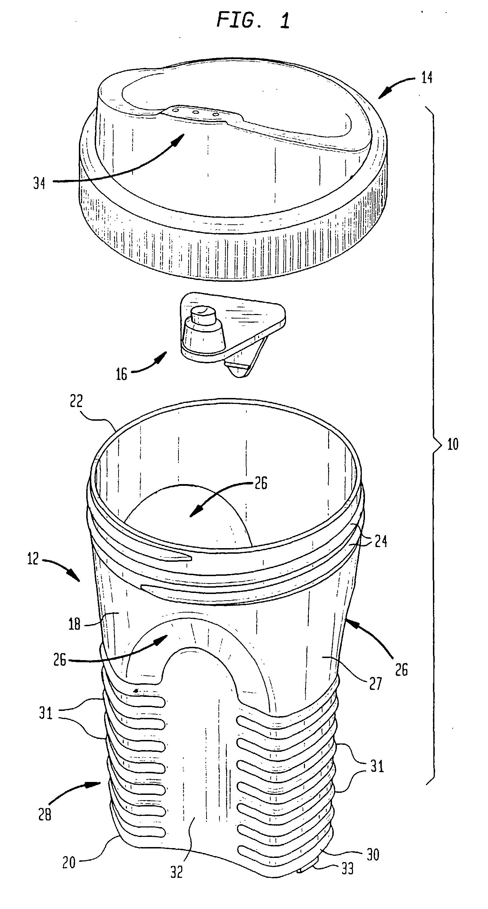

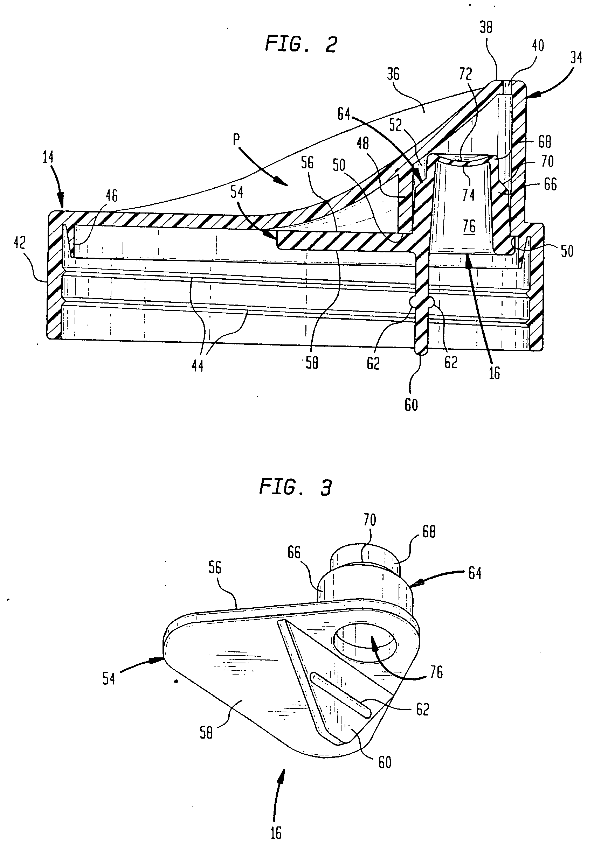

Referring to Figures 1 and 2, a spill-proof drinking vessel 10 for infants, toddlers or handicapped individuals includes the following components: a cup 12; a lid 14; and a flow control valve 16. Each of these components will be described in detail below.

The cup 12 includes a body 18 having a bottom 20, which defines a closed end of the cup 12, and an upper rim 22, which defines an open end of the cup 12. The upper rim 22 of the cup body 18 is provided with external threads 24 for a purpose to be described hereinafter. The cup body 18 also includes a plurality of elongated depressions 26 in a sidewall 27 thereof, the depressions 26 being spaced at equal arcuate increments about the periphery of the sidewall 27. Each depression 26 extends upwardly from the bottom 20 of the cup body 18 toward the upper rim 22, terminating short of the external threads 24. The depressions 26 are sized, shaped, and oriented so as to provide gripping surfaces (i.e., handgrips) for the fingers and/or hands of an infant or other user of the cup 12. While useful, the depressions 26 could be omitted, whereby the cup body 18 would simply have a cylindrical shape.

In a preferred embodiment, the cup body 18 is made from clarified polypropylene, which has translucent properties so that the contents of the cup 12 can be viewed externally by an observer for liquid type and level identification. Of course, any other suitable material having translucent properties could be used. Polypropylene and any other materials suitable for use in making the cup body 18 are relatively brittle, especially when cooled to below room temperature (e.g., immediately after the cup 12 has been removed from a refrigerator or the like). As a result, when the cup body 18 is made from such materials, it is susceptible to breakage or cracking when dropped.

To reinforce the cup body 18, it is provided with an overmolding 28, which also performs other useful functions described below. Structurally, the overmolding 28 includes a solid base 30, which completely covers the bottom 20 of the cup body 18, a plurality of relatively narrow, horizontal ribs 31, which extend circumferentially about the sidewall 27 of the cup body 18 at spaced intervals, and a plurality of relatively wide, vertical ribs 32, one for each of the depressions 26. The design of the overmolding 28 can be varied. For instance, the generally horizontal ribs 31 and/or the generally vertical ribs 32 can be replaced or supplemented by horizontal and/or vertical ribs having a plain shape or a particular pattern or design, such as a variety of different geometric configurations selected to impart a unique decorative look to the cup 12. In order to maintain a spacing between the base 30 and an underlying support surface (e.g., a tabletop or a countertop), the base 30 is provided with a plurality of feet 33 (only one of which is visible in Figure 1).

The overmolding 28 is preferably made from a thermoplastic elastomer, such as vulcanized rubber marketed by Advanced Elastomer Systems of Akron, Ohio under the trademark SANTOPRENE, which can be applied to the cup body 18 by any conventional bi-component molding (e.g., insert or co-injection) process. Because the elastomeric materials used to make the overmolding 28 are generally softer than the polypropylene and similar materials used to make the cup body 18, the overmolding 28 improves the grippability of the cup 12, especially when it is wet, and inhibits the cup 12 from being slid along a support surface such as a counter top or table top, thereby rendering the cup 12 skid resistant. In addition, the softer overmolding 28 functions as a bumper or shock absorber, thereby inhibiting breakage especially when the cup 12 is cold. Even if the cup body 18 were to crack for any reason, the overmolding 28 would capture the resulting fragments, thereby making for a safer overall product. Last, but not least, the overmolding 28 provides a layer of thermal insulation, which inhibits condensation from forming on the cup 12, while also functioning as a permanent decoration when it is applied to the cup body 18 in an aesthetically pleasing pattern or design.

The lid 14 includes a raised, arcuate rim 34 formed from opposed sloping flanks 36 which merge into a tip 38 provided with orifices 40 designed to permit fluid flow therethrough in a manner to be described hereinafter. The provision of the flanks 36 impart a basically spoutless design to the lid 14, while the size and shape of the entire rim 34 are specifically selected to allow a user to simulate drinking from a conventional open-mouthed cup. It should be noted, in this regard, that the flanks 36 cooperate with the tip 38 to form a pocket (P) adapted to receive the user's nose (see Figure 2).

With particular reference to Figure 2, the lid 14 also includes a circular skirt 42 which is provided with internal threads 44 adapted to threadedly engage the external threads 24 on the upper rim 22 of the cup body 18, whereby the lid 14 can be removably applied to the cup 12. A circular sealing ring 46 is positioned within the lid 14 in close proximity to the skirt 42. The skirt 42 and the sealing ring 46 are arranged concentrically so that they can perform a function which will be described hereinafter.

An internal, tubular sleeve 48 extends below the orifices 40, terminating in a lower edge 50. The sleeve 48 forms a generally cylindrical socket 52 having a size and shape. selected so as to releasably receive the flow control valve 16 in a manner which will be described in greater detail below. It should be noted that the sleeve 48 actually merges into the sealing ring 46 (i.e., there is no space between the sleeve 48 and the sealing ring 46), whereby the sleeve 48 is located in close proximity to the periphery of the lid 14 as defined by the skirt 42.

The lid 14 is preferably made from polyethylene or any other suitable material. Unlike the cup body 18, the lid 14 is preferably opaque so that the flow control valve 16 will not be visible through the lid 14 when it is applied to the cup 12.

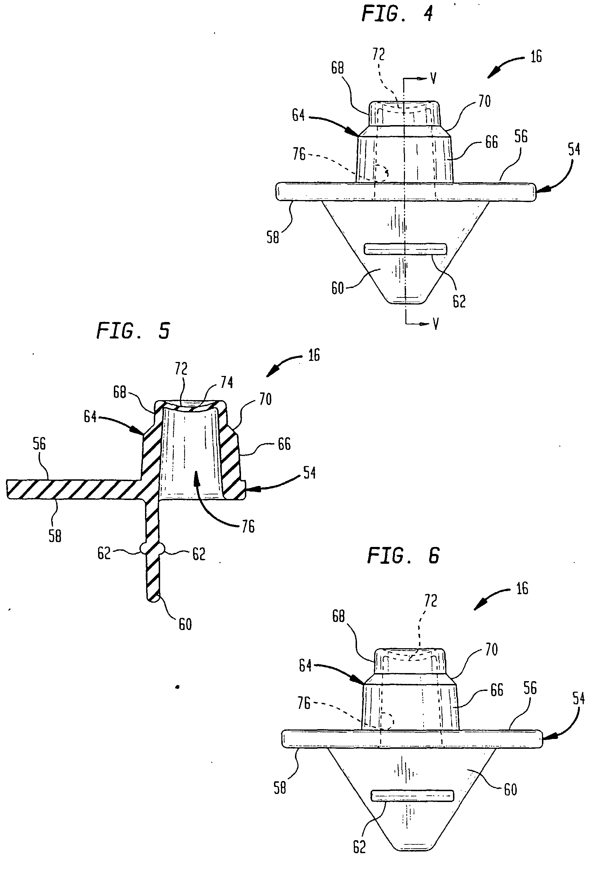

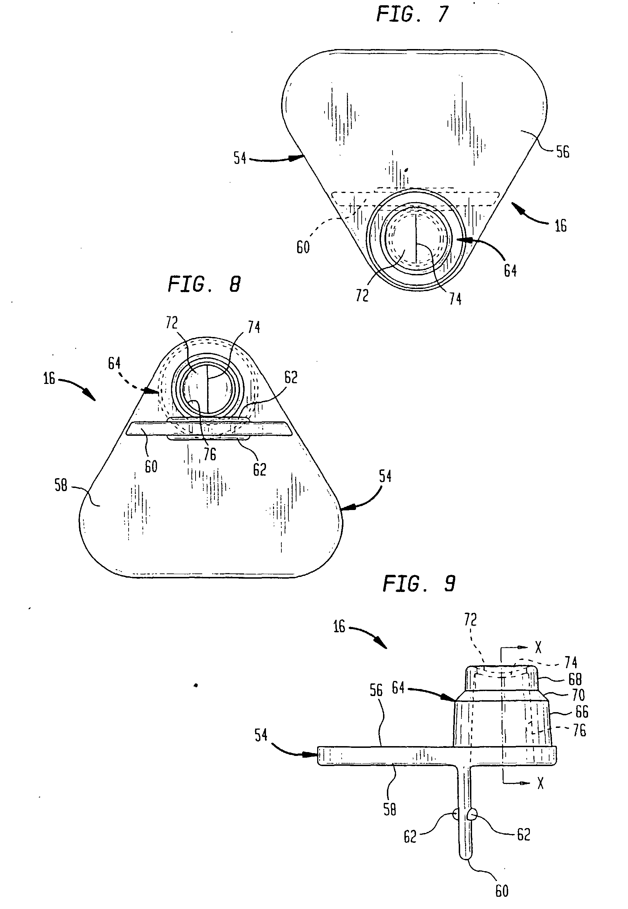

In its most basic form as shown in Figures 1-11, the flow control valve 16 includes a generally triangular-shaped body 54 with a substantially flat upper surface 56 and a substantially flat lower surface 58. A fin-like handle 60 extends from the lower surface 58 of the valve body 54. Linear ribs 62 extend outwardly from opposite sides of the handle 60 for a purpose to be described hereinafter.

A nipple 64 projects from the upper surface 56 of the valve body 16 in the vicinity of one of its rounded apices. The nipple 64 has a lower, thick-walled section 66 and an upper, thin-walled section 68, which is separated from the lower section 66 by an annular inclined shoulder 70. Both of the sections 66, 68 have truncated, conical shapes such that they taper upwardly away from the upper surface 56 of the valve body 16.

The outer diameter and taper of the lower section 66 are specifically selected so as to form a fluid-tight seal when the nipple 64 is inserted into the socket 52 of the lid 14. The upper section 68 is tapered in order to facilitate manufacture and assembly, as will be described in greater detail below.

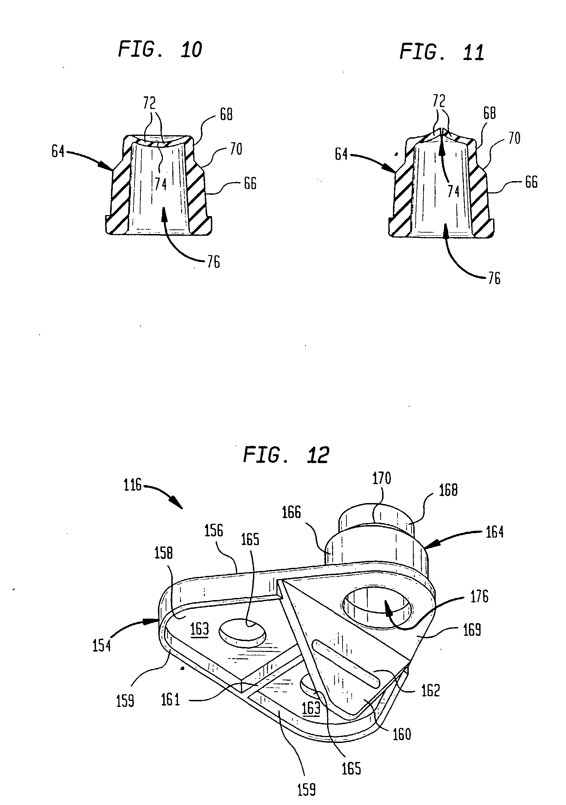

The upper section 68 of the nipple 64 includes a circular diaphragm 72, which is provided with a slit 74 (see, for instance, Figures 2, 5, 7, 8, 10 and 11) along a diameter thereof so that fluid can flow through the nipple 64 in a manner to be described hereinafter. For reasons which will also be described hereinafter, the central region of the diaphragm 72 has a greater thickness than the remainder of the diaphragm 72. In its normal (i.e., relaxed) state or position, the diaphragm 72 is convex relative to the valve body 54 and the slit 74 is closed (see Figure 10). Upon deflection of the diaphragm 72 in a direction away from the valve body 54, the slit 74 opens so as to communicate with a passageway 76 which extends through the valve body 54 and the nipple 64 (see Figure 11).

The flow control valve 16 is preferably molded from silicone or any other suitable elastomer, either a thermoplastic or a thermoset. While such materials render the flow control valve 16 quite flexible, the size, shape, and rigidity of the valve body 16 are specifically selected so as to inhibit entry into the throat of an infant or other user, even upon folding or squeezing of the valve body 16.

In order to assemble the drinking vessel 10, the handle 60 of the flow control valve 16 would be gripped between the thumb and forefinger of an individual, who would then insert the nipple 64 into the socket 52 of the lid 14 until the upper surface 56 of the valve body 54 engages the lower edge 50 of the internal sleeve 48. It should be noted that the ribs 62 make the handle 60 easier to grip, while the tapers on the lower and upper sections 66, 68 of the nipple 64 facilitate insertion into the socket 52. As indicated above, the tapered lower section 66 of the nipple 64 also forms a fluid-tight seal when it is fully seated in the socket 52, thereby inhibiting air or liquid to bypass the passageway 76 by flowing around the nipple 64 rather than through it. Because the shoulder 70 and the upper section 68 do not come into contact with the walls of the socket 52, the diaphragm 72 is isolated from any forces applied to the nipple 64 when it is seated in the socket 52 of the lid 14. Such isolation of the diaphragm 72 ensures that the slit 74 will not be opened inadvertently.

Before or after the insertion of the flow control valve 16 into the lid 14, the cup 12 is filled with a desired amount of liquid. Thereafter, the lid 14 is manually screwed on to the upper rim 22 of the cup 12. When the lid 14 has been completely tightened, its skirt 42 and sealing ring 46 sealingly capture the upper rim 22 of the cup 12 therebetween, thereby inhibiting leakage of liquid through the threaded joint formed by the threads 24, 44. The drinking vessel 10 is now ready to dispense the liquid to a user.

In use, the drinking vessel 10 is gripped by a user or an attendant and then lifted until the tip 38 is placed in the user's mouth. As indicated above, the depressions 26 make the cup body 18 easier to grip, especially when the user is an infant or a handicapped individual. Tilting of the cup 12 causes the liquid contained in the cup body 18 to flow into the passageway 76 of the nipple 64. When the user then creates a negative pressure within the internal sleeve 48, such as by sucking through the orifices 40, the liquid is drawn against the diaphragm 72, thereby moving the diaphragm 72 from its normal position, in which the slit 74 is closed, to a deflected position, in which the slit 74 is open. The decreased thickness of the diaphragm 72 at its outer extremity (see Figure 11) promotes the proper and complete opening of the slit 74. As long as the slit 74 remains open, liquid can flow through the passageway 76 in the nipple 64 and then out the lid 14 through the orifices 40 in the tip 38. The location of the nipple 64 and the orifices 40 in close proximity to the extremities of the cup 12 and the lid 14, respectively, allows maximum evacuation of the liquid from the drinking vessel 10.

When the differential pressure acting of the valve drops to a predetermined level, the diaphragm 72 automatically returns to its normal or relaxed position, thereby closing the slit 74 and preventing any further flow of liquid through the nipple 64. Air is, however, allowed to be drawn back into the nipple 64 through the slit 74 in order to equalize any pressure differential occurring within the cup 12 as a result of the liquid dispensing operation described above. In the event that liquid is trapped in the internal sleeve 48 between the orifices 40 and the diaphragm 72, the trapped liquid flows back into the nipple 64 along with the air. Sealing of the slit 74 is promoted by the increased thickness of the diaphragm 72 in the vicinity of the slit 74 (see Figure 10).

At the conclusion of a dispensing operation, the lid 14 can be unscrewed from the cup 12 to allow for easy cleaning of the individual components. Cleaning is further facilitated by removing the flow control valve 16 from the lid 14 and cleaning these components individually. Removal of the flow control valve 16 can be accomplished quickly and efficiently by simply gripping the handle 60 as described above and then pulling on it until the nipple 64 of the flow control valve 16 is dislodged from the socket 52 of the lid 14. After all of the individual components have been properly cleaned, the drinking vessel 10 can be reassembled as described above in preparation for another dispensing operation.

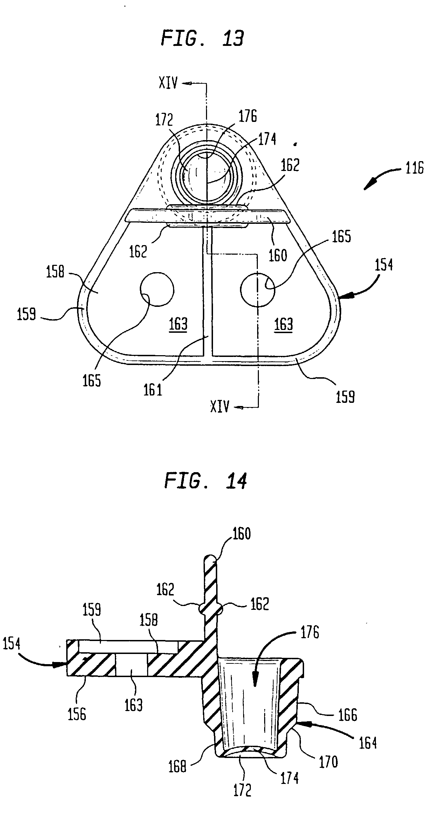

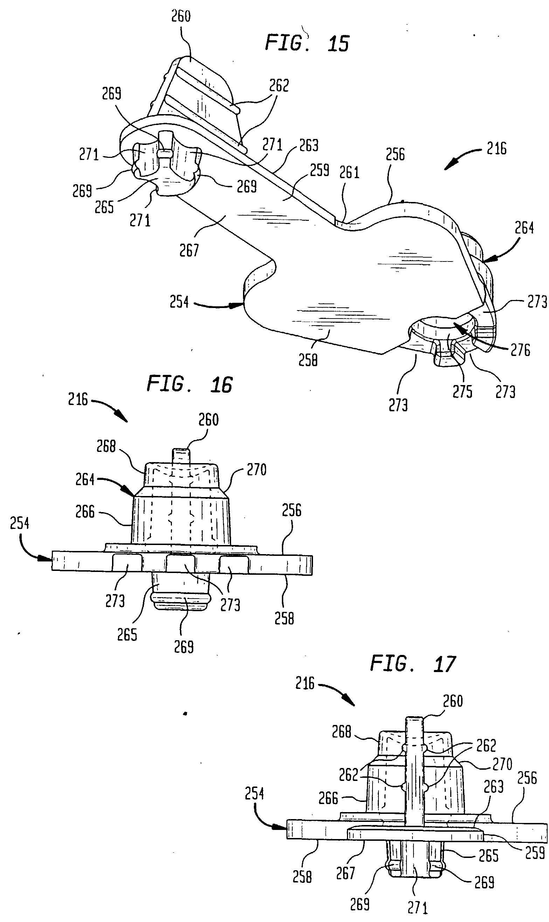

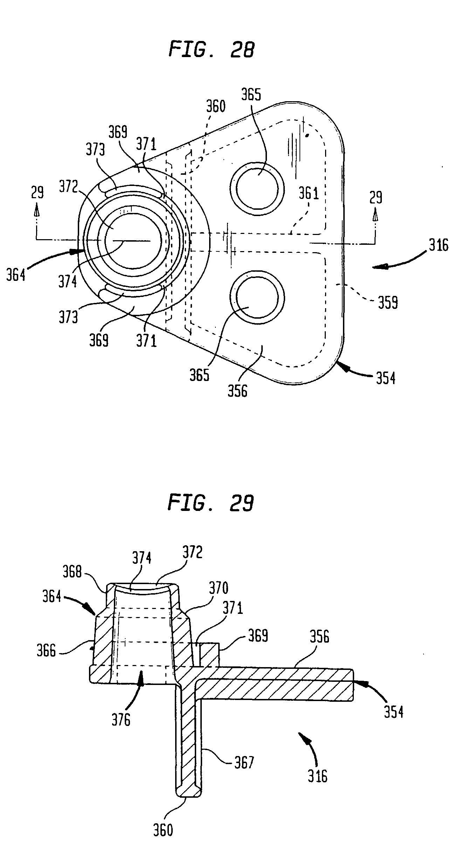

Each individual component of the drinking vessel 10 can be replaced by similar or different components. For instance, the lid 14 can receive various different flow control valves. One alternate flow control valve is shown in Figures 12-14, while other alternate flow control valves are shown in Figures 15-24 and 25-29, respectively.

What follows are descriptions of the three alternate flow control valves referred to above. In describing these alternate embodiments, elements which correspond to elements described above in connection with the embodiment of Figures 1-11 will be designated by corresponding reference numerals increased by one hundred, two hundred and three hundred, respectively. Elements of the alternate embodiments having no counterparts in Figures 1-11 will be designated by odd numbered reference numerals. Unless otherwise specified, the alternate embodiments are constructed and operate in the same manner as the flow control valve 16 of Figures 1-11.

Referring to Figures 12-14, a flow control valve 116 includes a generally triangular-shaped body 154 having an upper surface 156 and a lower surface 158. In order to rigidify the valve body 154, the lower surface 158 is provided with peripheral ribbing 159 extending from one side of a fin-like handle 160 (which could be rendered expendable by the ribbing 159) to an opposite side thereof, as well as a central rib 161 bisecting the peripherally ribbed portion of the lower surface 158 into two sections 163. The enhanced rigidity of the valve body 154 ensures that the flow control valve 116 will pass the most stringent small parts tests, such as those required in the United States and Canada, which have been promulgated to prevent the sale of products having parts that can easily become lodged in an infant's throat.

As a further safety means, the flow control valve 116 is provided with a pair of holes 165, one in each of the sections 163. Each of the holes 165 can function as an emergency air passageway in the event that the flow control valve 116 becomes lodged in a user's throat. The holes 165 may also be sized and shaped to receive the rack pins of an automatic dishwasher.

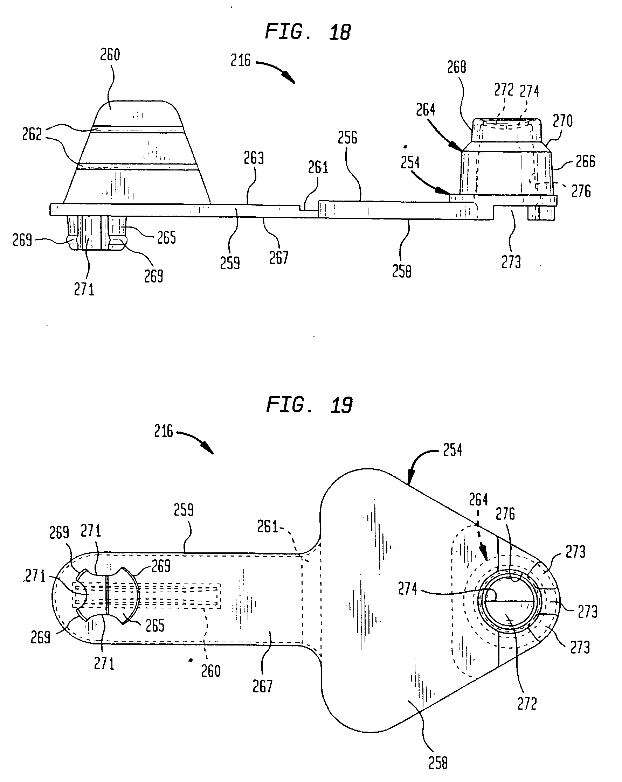

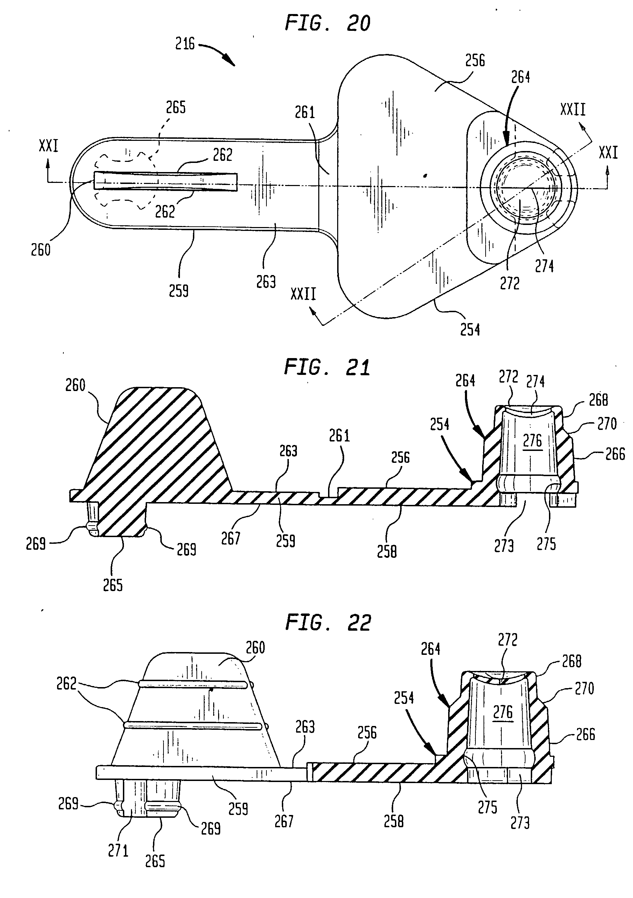

With reference now to Figures 15-24, a flow control valve 216 includes a generally triangular-shaped body 254 having an upper surface 256 and a lower surface 258. A retaining strap 259 is pivotally attached to one side of the valve body 254 by a living hinge 261 (see Figures 18 and 21). If the retaining strap 259 is made from a sufficiently flexible material, the living hinge 261 may be eliminated.

The retaining strap 259 has a fin-like handle 260, which depends from an upper surface 263 of the retaining strap 259. A tapered plug 265, which will be described in greater detail below, depends from a lower surface 267 of the retaining strap 259. The plug 265 has a plurality of snap beads 269, whose function will be described hereinafter, and a plurality of cutouts 271, whose function will also be described hereinafter. While three snap beads 269 and three cutouts 271 are depicted, it should be understood that their number could be reduced or increased within practical limitations.

The lower surface 258 of the valve body 254 is also provided with a plurality of cutouts 273, which cooperate with the cutouts 271 in a manner to be described hereinafter. The cutouts 273 communicate with a passageway 276 provided in a nipple 264 projecting from the upper surface 256 of the valve body 254. The passageway 276 includes a circular groove 275 (see Figures 21 and 22), whose function will be described below.

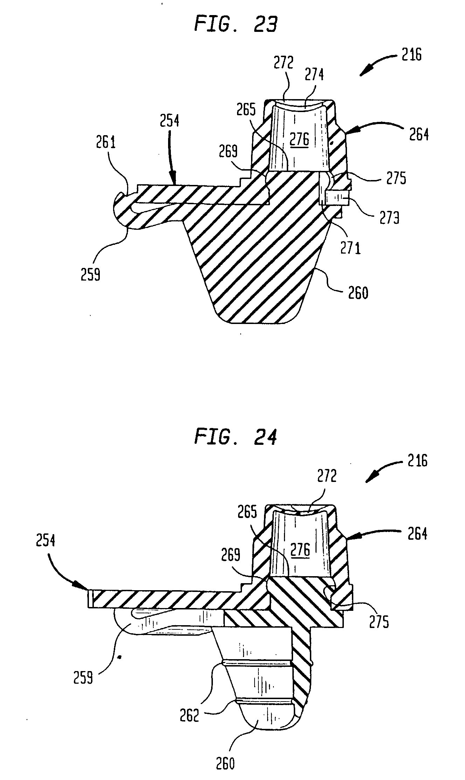

Before inserting the flow control valve 216 into a cap, such as the lid 14 of Figures 1-11, the handle 260 can be gripped to pivot the retaining strap 259 about a pivot axis defined by the living hinge 261 until the plug 265 is inserted into the passageway 276 in the valve body 254. The insertion of the plug 265 is facilitated by the fact that its taper matches that of the passageway 276. When the plug 265 has been fully inserted into the passage 276 (see Figures 23 and 24), the snap beads 269 are releasably received in the groove 275, while the cutouts 271 are aligned with the cutouts 273.

In use, liquid flows around the edges of the strap 259, through the aligned cutouts 271, 273 and into the passageway 276 of the nipple 264. The liquid is then discharged from the nipple 264 through a slitted diaphragm 272, which operates in the same manner as the diaphragm 72 of Figures 1-11. The retaining strap 259 promotes proper operation of the diaphragm 272 by performing a damming function which deflects the flowing liquid so as protect the diaphragm 272 from excessive pressure surges that could be produced if the liquid were allowed to impact the diaphragm 272 without first being deflected. During a feeding operation, the cutouts 271, 273 create a siphoning effect that maximizes liquid evacuation.

At the conclusion of a feeding operation, the handle 260 can be gripped and pulled, thereby dislodging the plug 265 from the passageway 276. The flow control valve 216 may then be removed from its associated cap. Of course, before dislodging the plug 265 and removing the flow control valve 216, it would be necessary to detach the lid from its associated cup. The ability to dislodge or remove the plug 265 from the passageways 276 makes the flow control valve 216 easier to clean.

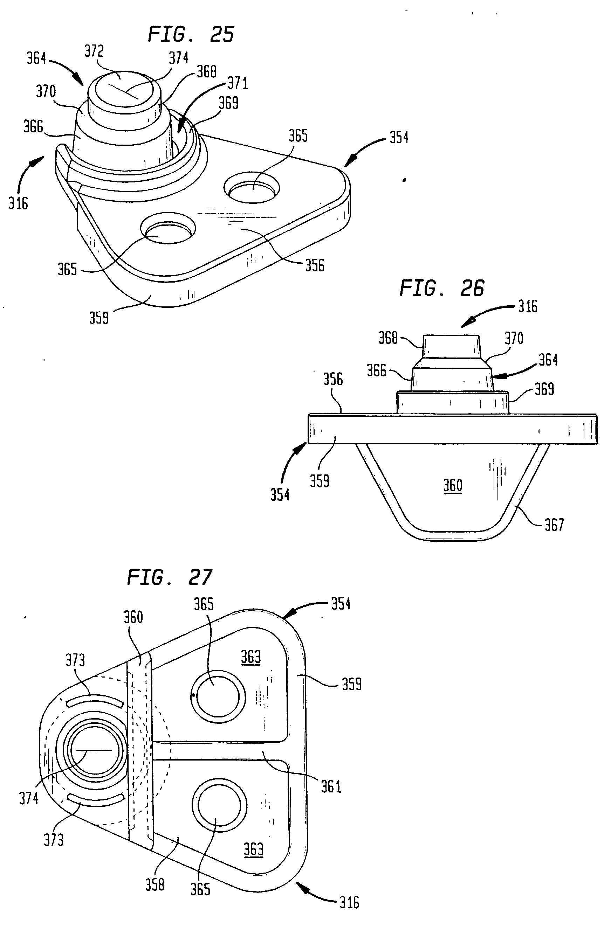

Referring to Figures 25-29, a flow control valve 316 includes a generally triangular-shaped body 354 having an upper surface 356 and a lower surface 358. In order to rigidify the valve body 354, the lower surface 358 is provided with peripheral ribbing 359 extending from one side of a fin-like handle 360 (which could be rendered expendable by the ribbing 359) to an opposite side thereof, as well as a central rib 361 bisecting the peripherally ribbed portion of the lower surface 358 into two sections 363. The enhanced rigidity of the valve body 354 ensures that the flow control valve 316 will pass the most stringent small parts tests, such as those required in the United States and Canada, which have been promulgated to prevent the sale of products having parts that can easily become lodged in an infant's throat.

As a further safety means, the flow control valve 316 is provided with a pair of holes 365, one in each of the sections 363. Each of the holes 365 can function as an emergency air passageway in the event that the flow control valve 316 becomes lodged in a user's throat. The holes 365 may also be sized and shaped to receive the rack pins of an automatic dishwasher.

As can be appreciated, the foregoing features are common to the flow control valve 116 of Figures 12-15. The flow control valve 316 does, however, employ additional features which are not common to the flow control valve 116 or to any of the other flow control valve embodiments described above. These additional features will be described hereinbelow.

The handle 360 includes its own peripheral ribbing 367 for the purpose of rigidifying the handle 360. The peripheral ribbing 367 also makes the handle 360 easier to grip and therefore replaces the ribs 162 employed by the handle 160 of the flow control valve 116 (see Figures 12-15).

The upper surface 356 of the flow control valve 316 includes a semi-circular collar 369 which extends more than half way around a nipple 364 forming a semi-circular trough 371, whose function will be described hereinafter. A pair of arcuate slots 373 is provided in the bottom of the trough 371 on opposite sides of the nipple 364. Each of the slots 373 extends from the upper surface 356 of the valve body 354 to a lower surface 358 thereof for a purpose to be described hereinafter.

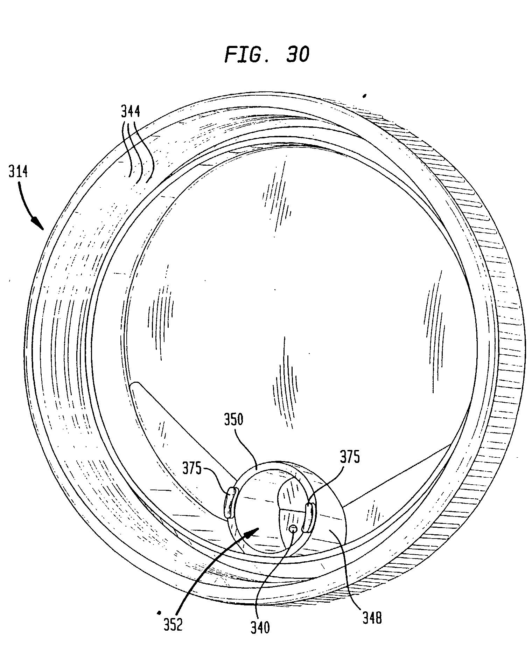

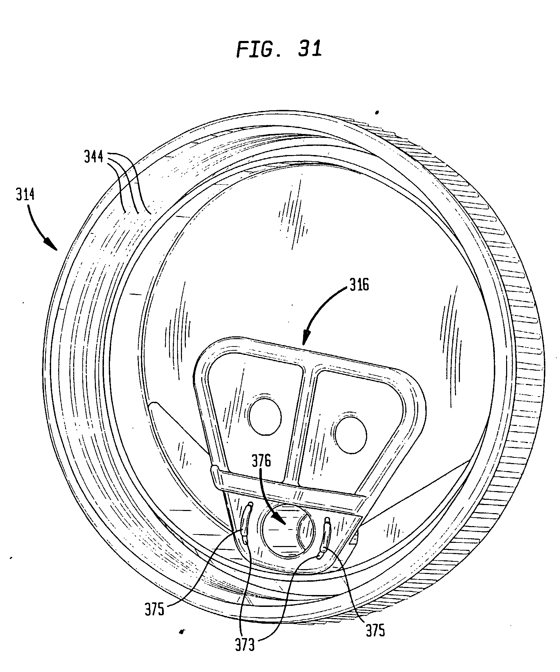

Referring now to Figures 30 and 31, the flow control valve 316 is especially adapted for use with a lid 314, which is identical to the lid 14 of Figures 1 and 2 except that it includes a pair of arcuate tabs 375 on a lower edge 350 of an internal, tubular sleeve 348. The size and shape of the tabs 375 are complementary to those of the slots 373 in the flow control valve 316. Thus, when the flow control valve 316 has been assembled on the lid 314, the tabs 375 extend through the slots 373 (see Figure 31) to provide a visual and tactile indication that the flow control valve 316 has been properly and completely inserted. The size and shape of the tabs 375 and the slots 373 can be varied, as long as they are complementary to each other. For instance, the tabs 375 could be in the form of round pins or posts, while the slots 373 could be in the form of round holes.

The tabs 375 also cooperate with the slots 373 to increase the interference contact between the valve body 354 and the lid 314, thereby reducing the possibility that the flow control valve 316 may be inadvertently dislodged from the lid 314. The interference contact between the valve body 354 and the lid 314 is further increased by the collar 369, which frictionally engages the outer surface of the sleeve 348 when the sleeve 348 has been inserted into the trough 371 between the collar 369 and the nipple 364.

It will be understood that the embodiments described herein are merely exemplary and that a person skilled in the art may make many variations and modifications without departing from the spirit and scope of the invention. All such variations and modifications are intended to be included within the scope of the invention as defined in the appended claims.

## Claims

1. A cup comprising a body and an overmolding partially covering said body, said overmolding being made out of a material different from said body.

2. A cup according to Claim 1, wherein said body has a closed bottom and an open top, said overmolding completely covering said bottom of said body, wherein said body has a sidewall extending between said top and said bottom of said body, said overmolding partially covering said sidewall and wherein said overmolding includes a plurality of ribs spaced apart on said sidewall of said body, thereby forming a plurality of gripping surfaces.

3. A cup according to Claim 2, wherein said ribs extend circumferentially about said sidewall of said body.

4. A cup according to Claim 3, wherein said sidewall of said body includes a plurality of depressions, each depression extending longitudinally along said body and being sized and shaped so as to form a handgrip.

5. A lid comprising a substantially closed top having at least one liquid-dispensing orifice therein and valve-receiving means positioned below said top in communication with said at least one orifice, said valve-receiving means being positioned in close proximity to a peripheral edge of said lid.

6. A lid according to Claim 5, further comprising a raised rim having sloping flanks which merge into said tip, said flanks cooperating with said tip to form a pocket having a size and shape selected to accommodate a user's nose.

7. A flow control valve, comprising a polygonally-shaped body having a plurality of comers and a liquid-dispensing nipple positioned in one of said corners of said body.

8. A flow control valve according to Claim 7, wherein said nipple includes a fluid passageway extending therethrough, a small-diameter portion remote from said body; a large diameter portion proximate to said body, said large diameter portion communicating with said passageway and said small-diameter portion; and a slitted diaphragm positioned within said small-diameter portion of said nipple.

9. A flow control valve according to Claim 7 or Claim 8, wherein said body includes a lower surface and wherein said body includes a handle depending from said lower surface.

10. A flow control valve according to any one of Claims 7 to 9, further comprising a semi-circular collar disposed about said nipple, said collar cooperating with said nipple to form a semi-circular trough sized and shaped to frictionally retain a free end of a tubular member depending from a lid into which said flow control valve may be inserted.

11. A flow control valve according to any one of Claims 7 to 10, further comprising plugging means for partially plugging said passageway in said body, wherein said plugging means includes a retaining strap pivotally attached to said body, said retaining strap including a plug sized and shaped so as to be removably received within said passageway in said body.

12. A closure assembly for a cup, comprising a lid having a substantially closed top with at least one liquid-dispensing orifice therein and receiving means positioned below said top in communication with said at least one orifice, said receiving means being positioned in close proximity to a peripheral edge of said lid; and a flow control valve having a polygonally-shaped body with a plurality of comers and a liquid-dispensing nipple positioned in one of said comers of said body, said nipple being removably received within said receiving means of said lid.

13. A closure assembly according to Claim 12, wherein said lid includes an internal sealing ring positioned adjacent to said peripheral edge of said lid, said receiving means including a tubular sleeve which merges into said sealing ring, said sleeve having a free end and at least one tab depending from said free end of said sleeve.

14. A closure assembly according to Claim 13, wherein said flow control valve includes a semi-circular collar disposed about said nipple, said collar cooperating with said nipple to form a semi-circular trough sized and shaped to frictionally retain said free end of said sleeve.

15. A closure assembly according to Claim 14, wherein said free end of said sleeve includes a pair of arcuate tabs extending therefrom and said trough has a bottom provided with a pair of arcuate slots, each of said slots being sized and shaped to frictionally engage a corresponding one of said tabs.

16. A drinking vessel, comprising a cup having a body and an overmolding partially covering said body, said overmolding being made out of a material different from said body; a lid removably attached to said body and having a substantially closed top with at least one liquid-dispensing orifice therein and receiving means positioned below said top in communication with said at least one orifice, said receiving means being positioned in close proximity to a peripheral edge of said lid, and a flow control valve having a polygonally-shaped body with a plurality of corners and a liquid-dispensing nipple positioned in one of said comers of said body, said nipple being removably received within said receiving means of said lid.
